# EUROPEAN PATENT APPLICATION

(11) **EP 2 023 262 A2**
(43) Date of publication of application: **11.02.2009**
(21) Application number: 08004930.7
(22) Date of filing: 17.03.2008
(51) Int. Cl.: G06F 21/20

(54) **Authentication system and authentication method**

(30) Priority: 27.07.2007 JP 2007196102
(71) Applicant: HITACHI SOFTWARE ENGINEERING CO., LTD., Shinagawa-ku 140-0002 Tokyo (JP)
(72) Inventor: Tsutsumi, Toshiyuki, Tokyo 140-0002 (JP); Endo, Takeaki, Tokyo 140-0002 (JP)
(74) Representative: Liesegang, Eva

(57) **Abstract**

There is provided a portable terminal possessed by a user of a client personal computer and capable of being connected to a server independently. The server has a function of transmitting identifier-including challenge data to the client personal computer for an authentication process, receiving identifier-including response data from the client personal computer, extracting corresponding challenge data and authenticating the client personal computer based on the extracted challenge data and the received response data. The client personal computer has a function of receiving the identifier-including challenge data from the server and displaying the identifier-including challenge data. The portable terminal has a function of acquiring the identifier-including challenge data received by the client personal computer, generating identifier-including response data from the acquired identifier-including challenge data and transmitting the identifier-including response data to the server.

## Description

### BACKGROUND OF THE INVENTION

### 1. Field of the Invention

The present invention relates to an authentication system and particularly relates to an authentication system and an authentication method using a challenge response system in an authentication portion such as a log-in of an existing network application.

### 2. Description of the Background Art

The risk that a user ID or a password used in user authentication, etc. of a network application may be stolen by attacks such as phishing, etc. has become higher in recent years. For this reason, the network application has been using not a fixed password but a disposable password at the time of authentication.

For example, a technique called S/Key described in "The S/KEY One-Time Password System", RFC1760, N.Haller, 1995/2, etc. has been known as the background art concerned with an authentication method using such a disposal password. S/Key is an authentication technique which reinforces user authentication of a remote log-in application with an authentication system called challenge response system.

The authentication technique using S/Key is a technique in which when a remote log-in client is to display a screen for entry of a user ID and a password at the time of user authentication, challenge data is displayed and a user calculates response data from the displayed challenge data and transmits the response data as a disposable password to a remote log-in server so that the user is authenticated by the remote log-in server. On this occasion, the remote log-in server establishes a communication connection between the remote log-in server and the client at and after the point of time when the challenge data are transmitted to the remote log-in client, so that the remote log-in server performs transmission and reception of the challenge data and the response data and compares verification data calculated from the transmitted challenge data with the received response data to thereby perform authentication.

In such an authentication method according to the background art, a server program can associate the transmitted challenge data with the received response data easily to thereby make it possible to perform an authentication process smoothly because the challenge data and the response data are exchanged for each other on one communication connection.

When the aforementioned authentication method according to the background art is applied to a server client system which is an existing product, a server client application which is a constituent member of the system needs to be changed so that an authentication function such as S/Key, etc. can be incorporated in the server client application. In a general server client system, it is however impossible to change the application per se because the application is provided as an executable (binary) program, so that it is difficult to incorporate the authentication function in the application. Even when the authentication function could be incorporated in the application, there would arise a problem that it is difficult to exchange the challenge data and the response data on one communication connection.

Moreover, in the aforementioned authentication method according to the background art, the server application needs to hold the challenge data to associate the challenge data with the response data. Since challenge data must be generated newly whenever there is an access from the client application, the number of challenge data to be held increases as the number of accesses increases. Accordingly, there arises a problem that masses of resources for holding the challenge data are consumed to increase the probability that a service to be provided by the server for performing authentication will be stopped. When the number of accesses increases because of DoS attacks, etc., this probability becomes so extremely remarkable that the server will fall into a situation that service must be stopped.

### SUMMARY OF THE INVENTION

An object of the present invention is to provide an authentication system and an authentication method using a challenge response system configured by addition of an authentication function of the challenge response system to an existing system without necessity of a new server, etc. to solve the aforementioned problems in the background art.

The foregoing object of the invention is achieved by an authentication system for authenticating a client personal computer, including a server, the client personal computer connected to the server through a network for using a service provided by the server, and a portable terminal possessed by a user of the client personal computer and capable of being connected to the server through the network or through another communication line, wherein: the server includes a unit for issuing identifier-including challenge data for an authentication process and transmitting the identifier-including challenge data to the client personal computer, a unit for receiving identifier-including response data from the client personal computer and extracting corresponding challenge data, and a unit for authenticating the client personal computer based on the extracted challenge data and the received response data; the client personal computer includes a unit for receiving the identifier-including challenge data from the server and displaying the identifier-including challenge data; the portable terminal includes a unit for acquiring the identifier-including challenge data received by the client personal computer, and a unit for generating identifier-including response data from the acquired identifier-including challenge data and transmitting the response data to the server; and a communication channel by which the identifier-including challenge data is transmitted from the server to the client personal computer and a communication channel by which the response data is transmitted from the portable terminal to the server are independent of each other.

According to the invention, there can be provided an authentication system using a challenge response system in which phishing fraudulence, etc. can be prevented by a simple countermeasure that slight functions are added to a browser program and a server program respectively without necessity of a new server, etc.

### BRIEF DESCRIPTION OF THE DRAWINGS

Fig. 1 is a block diagram showing configuration of an authentication system according to an embodiment of the invention;
Fig. 2 is a block diagram showing an example of configuration of a client personal computer;
Fig. 3 is a block diagram showing an example of configuration of a portable terminal;
Fig. 4 is a block diagram showing an example of configuration of a server;
Fig. 5 is a view showing an example of configuration of an account database;
Fig. 6 is a view showing an example of configuration of a challenge database;
Fig. 7A is a flow chart (A) for explaining an overall processing operation of the authentication system according to the embodiment of the invention;
Fig. 7B is a flow chart (B) for explaining the overall processing operation of the authentication system according to the embodiment of the invention;
Fig. 8 is a flow chart for explaining a processing operation of a challenge issue program in the server;
Fig. 9 is a flow chart for explaining a processing operation of a response generating program in the portable terminal; and
Fig. 10 is a flow chart for explaining a processing operation of an authentication program in the server.

### DESCRIPTION OF THE PREFERRED EMBODIMENT

An embodiment of the invention as to an authentication system and an authentication method will be described below more in detail with reference to the drawings.

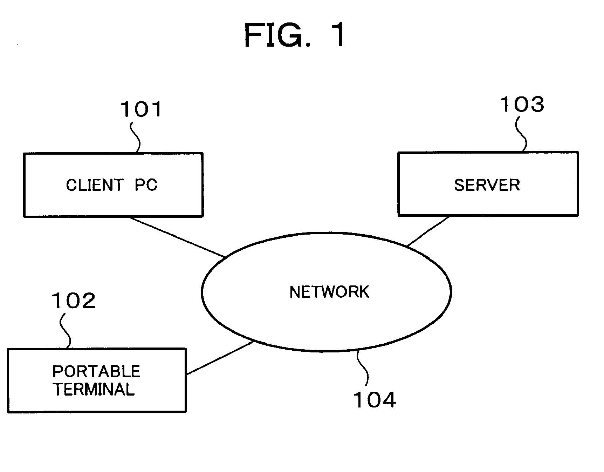

Fig. 1 is a block diagram showing the configuration of an authentication system according to an embodiment of the invention. The authentication system shown in Fig. 1 is configured so that a client personal computer (hereinafter referred to as client PC) 101, a portable terminal 102 and a server 103 are connected to a network 104. Although Fig. 1 shows the case where the number of apparatuses connected to the network 104 is one per kind, a plurality of apparatuses per kind may be connected to the network 104.

In the above description, the client PC 101 is an information processing apparatus such as a desktop PC, a notebook PC, a PDA (personal digital assistant) or the like which is used by a user. In the embodiment of the invention, the client PC 101 must be authenticated by the server 103 before the client PC 101 performs an ordinary process such as reception of a service provided by the server 103 or can receive a service from another service server etc. (not shown) connected to the network 104.

The portable terminal 102 is used together with the client PC 101 by the user at the time of authentication. The portable terminal 102 is an information processing apparatus such as a cellular telephone, a PHS or the like which is possessed by the user per se of the client PC 101. The portable terminal 102 can be connected to the server 103 by a communication connection other than the communication connection between the client PC 101 and the server 103 for providing an authentication service. Accordingly, the connection between the portable terminal 102 and the server 103 need not use the network 104 as long as the portable terminal 102 can be connected to the server 103 by another communication line, for example, used for service of a cellular telephone, a PHS, etc.

In the embodiment of the invention, the server 103 provides an authentication service to the client PC 101. The server 103 is an information processing apparatus such as a desktop PC, a blade PC, etc.

The client PC 101 and the server 103 can perform data communication through the network 104 formed as a public circuit network, the Internet, etc.

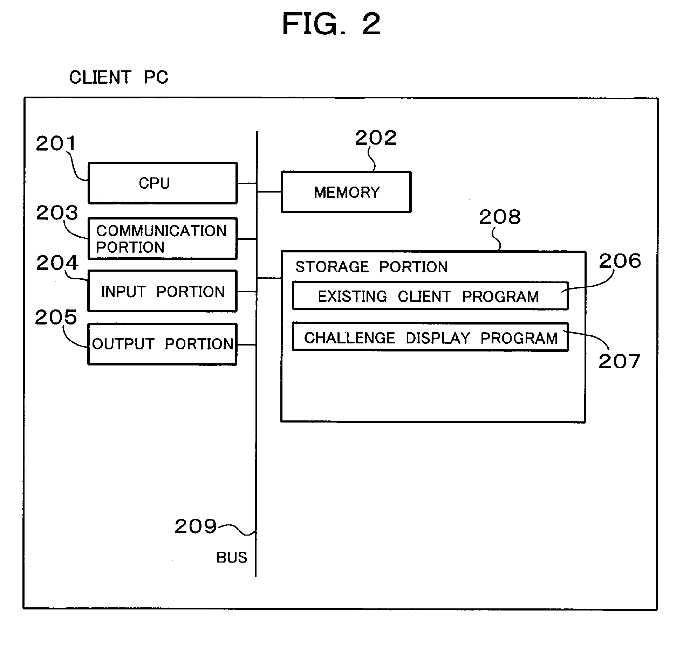

Fig. 2 is a block diagram showing an example of configuration of the client PC 101. As shown in Fig. 2, the client PC 101 is configured so that a CPU 201 for executing programs, a memory 202 for loading programs and data, a communication portion 203 for establishing connection to the other communication nodes, an input portion 204 for inputting instructions and data, an output portion 205 for outputting a system status, etc., and a storage portion 208 such as an HDD for storing an existing client program 206 and a challenge display program 207 are connected to one another by a bus 209.

The communication portion 203 has a function of establishing a connection between the communication portion 203 and the server 103 or another server (not shown) connected to the network 104 based on TCP which is a standard protocol of the Internet, and performing data communication.

The input portion 204 has input units such as a keyboard, a mouse, a pen input, a voice input, a button, a jog dial, a cross key, etc. The output portion 205 has output units such as a display, an audio output device, a printer, etc.

The existing client program 206 is a program for establishing a communication connection and performing data communication in order to use a service provided by an application of the server 103. The challenge display program 207 is a program for displaying challenge data transmitted from the server 103 for this invention.

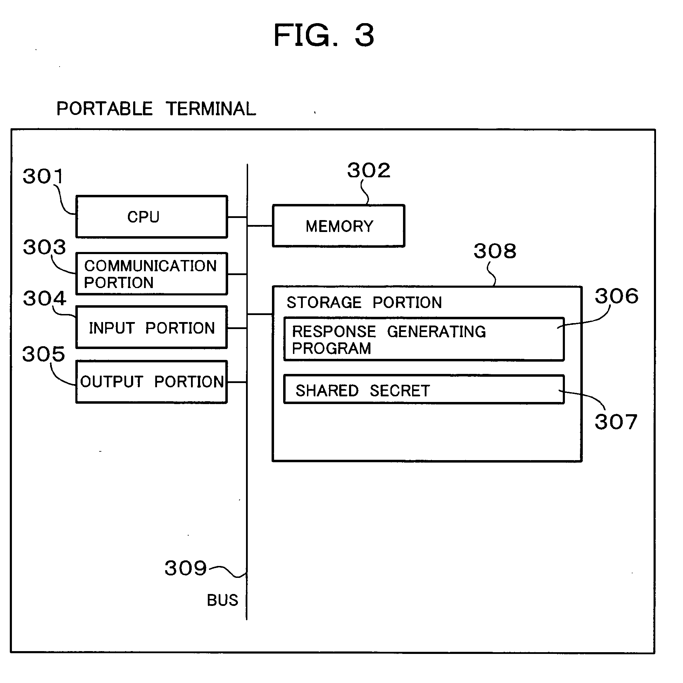

Fig. 3 is a block diagram showing an example of configuration of the portable terminal 102. As shown in Fig. 3, the portable terminal 102 is configured so that a CPU 301 for executing programs, a memory 302 for loading programs and data, a communication portion 303 for establishing a connection to other communication nodes, an input portion 304 for inputting instructions and data, an output portion 305 for outputting a system status, etc. and a storage portion 308 for storing a response generating program 306 and shared secret data 307 are connected to one another by a bus 309.

The response generating program 306 and the shared secret data 307 are provided for the invention. The response generating program 306 is a program for acquiring challenge data from the client PC 101 and generating response data to be transmitted to the server 103, from the acquired challenge data. The shared secret data 307 is secret data which is shared only with the server 103 on the basis of a predetermined agreement between the portable terminal 102 and the server 103.

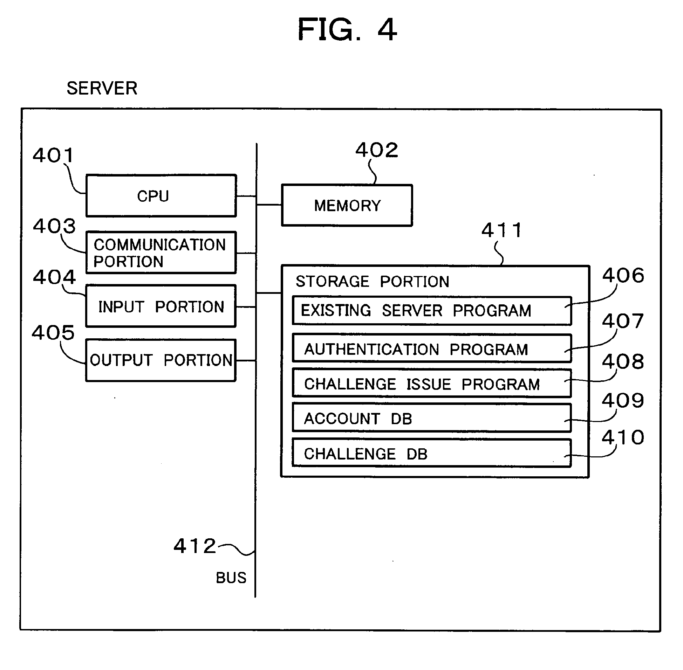

Fig. 4 is a block diagram showing an example of configuration of the server 103. As shown in Fig. 4, the server 103 is configured so that a CPU 401 for executing programs, a memory 402 for loading programs and data, a communication portion 403 for establishing a connection to other communication nodes, an input portion 404 for inputting instructions and data, an output portion 405 for outputting a system status, etc. and a storage portion 411 such as an HDD for storing an existing server program 406, an authentication program 407, a challenge issue program 408, an account database (hereinafter referred to as account DB) 409 and a challenge database (hereinafter referred to as challenge DB) 410 are connected to one another by a bus 412.

The existing server program 406 is a program for establishing a communication connection and performing data communication in order to provide a service to an application of the client PC 101. The authentication program 407 is a program using challenge data and response data for judging whether or not permission is given to a user, a transaction, etc. by authentication. The challenge issue program 408 is a program for generating challenge data to be transmitted to the client PC 101.

The account DB 409 stores account information used by a user at the time of authentication. The challenge DB 410 stores information concerned with challenge data issued by the server 103.

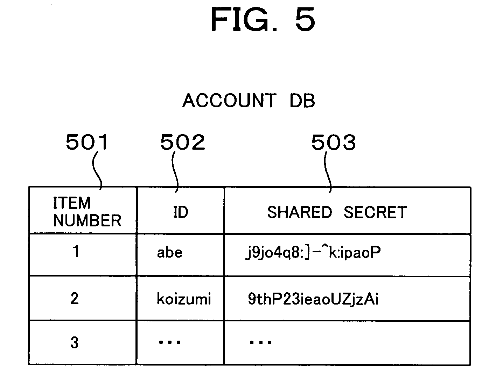

Fig. 5 is a view showing an example of configuration of the account DB 409. The account DB 409 is configured to have a plurality of records each of which is composed of a combination of an item number 501, an ID 502 and a shared secret data 503. The item number 501 is an identifier for deciding a record in the database (DB) uniquely. The ID 502 is an identifier for identifying a user. The shared secret data 503 is secret information shared only with the portable terminal 102 possessed by the user.

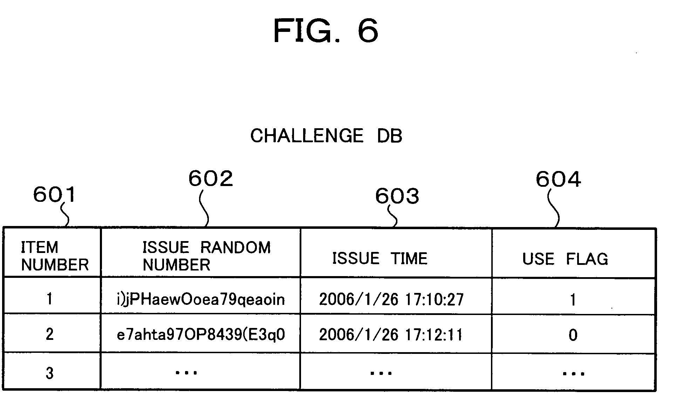

Fig. 6 is a view showing an example of configuration of the challenge DB 410. The challenge DB 410 is configured to have a plurality of records each of which is composed of a combination of an item number 601, an issue random number 602, an issue time 603 and a use flag 604. The item number 601 is an identifier for deciding a record in the DB uniquely. The issue random number 602 is a random number included in challenge data issued by the server 103. The issue time 603 is a point of time at which a corresponding random number 602 was generated. The use flag 604 is a flag for judging whether or not the corresponding random number 602 is used by the user. The use flag 604 is set at "0" for "unused" and at "1" for "used". The number of records allowed to be held in the challenge DB 410 is limited to a constant value according to the invention. The item number 601 is given iteratively with the constant number as its maximum value, so that an old one is deleted. This prevents a mass of resources from being consumed for holding the records.

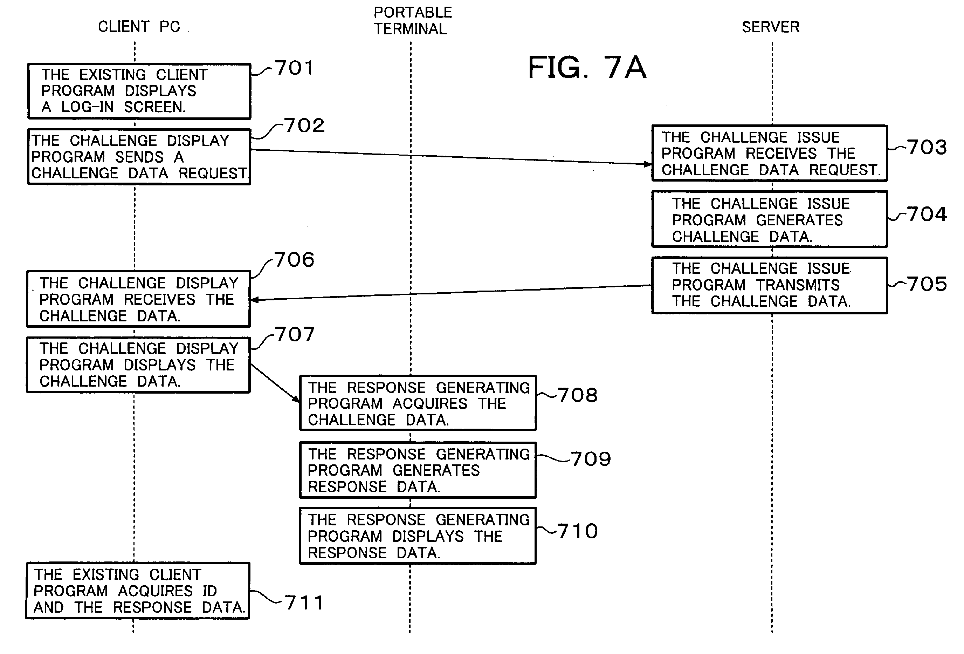

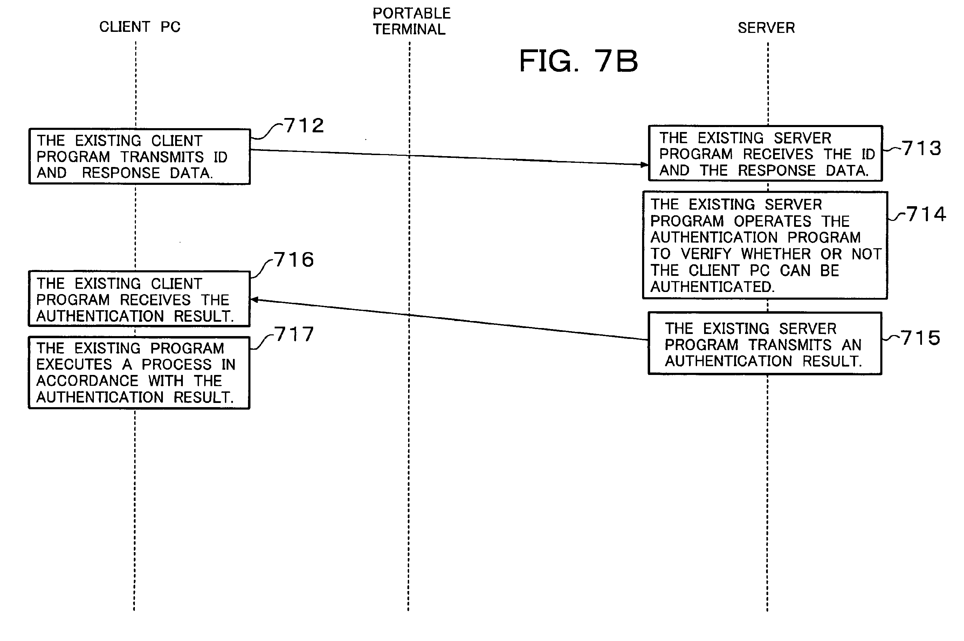

Figs. 7A and 7B are flow charts for explaining an overall processing operation of the authentication system according to the embodiment of the invention. The overall processing operation of the authentication system will be described below.
(1) First, the user operates the client PC 101 and operates the existing client program 206 on the client PC 101 to use a service provided by the existing server program 406 on the server 103. As a result, a log-in screen is displayed on a display which is the output portion 205 of the client PC 101 (step 701).
(2) Then, the challenge display program 207 on the client PC 101 is operated so that the challenge display program 207 transmits a challenge data request to the server 103 through the communication portion 203 (step 702).
(3) The challenge issue program 408 on the server 103 receives the challenge data request transmitted from the client PC 101 in the process of the step 702, so that the challenge issue program 408 receiving the challenge data request generates challenge data (steps 703 and 704).
(4) The challenge issue program 408 generating the challenge data in the process of the step 704 transmits the generated challenge data to the challenge display program 207 on the client PC 101 through the communication portion 403 (step 705) .
(5) The challenge display program 207 on the client PC 101 receives the challenge data transmitted from the challenge issue program 408 of the server 103 in the process of the step 705 (step 706).
(6) Then, the challenge display program 207 on the client PC 101 converts the challenge data received in the process of the step 706 into a two-dimensional bar code and displays the two-dimensional bar code on the output portion 205 of the client PC 101 (step 707).
(7) On this occasion, the user reads the two-dimensional bar code displayed on the output portion 205 of the client PC 101 by using the portable terminal 102. The reading can be performed by a camera provided in the portable terminal 102 such as a cellular telephone, a PHS, etc. Then, the response generating program 306 on the portable terminal 102 acquires the challenge data provided as the two-dimensional bar code (step 708).
(8) Then, the response generating program 306 generates response data by calculating the response data from the challenge data acquired in the process of the step 708 and displays the generated response data on the output portion 305 on the portable terminal 102 (steps 709 and 710).
(9) On this occasion, the user inputs the response data displayed on the output portion 305 of the portable terminal 102 and an ID remembered by the user into the client PC 101 by using a keyboard or the like which is the input portion 204 of the client PC 101. The existing client program 206 on the client PC 101 acquires the inputted response data and user ID (step 711).
(10) The existing client program 206 on the client PC 101 transmits the response data and user ID acquired in the process of the step 711 to the server 103 through the communication portion 203 (step 712).
(11) The existing server program 406 on the server 103 receives the response data and user ID transmitted from the client PC 101 in the process of the step 712 (step 713).
(12) The existing server program 406 on the server 103 calls the authentication program 407 with the response data and user ID received from the client PC 101 in the process of the step 713 as arguments and makes the authentication program 407 verify whether or not the client PC 101 is authenticated (step 714).
(13) Then, the existing server program 406 transmits a verification result of the authentication process obtained by the authentication program 407 in the step 714 to the client PC 101 (step 715).
(14) The existing client program 206 on the client PC 101 receives the verification result transmitted from the server 103 in the process of the step 715 and executes a process in accordance with the received verification result. That is, use of a service provided by the existing server program 406 on the server is started when permission is given to the client PC 101 by the authentication, whereas a log-in screen as well as an authentication error screen is displayed on the output portion 205 when permission is not given to the client PC 101 by the authentication (steps 716 and 717).

Although the above processing has been described in the case where challenge data is displayed as a two-dimensional bar code on the output portion 205 of the client PC 101 and the two-dimensional bar code is read by a camera provided in the portable terminal 102 such as a cellular telephone, a PHS, etc., the invention may be applied to the case where the client PC 101 is directly connected to the portable terminal 102 so that the portable terminal 102 acquires the challenge data. In this case, configuration may be made so that the response data generated by the portable terminal 102 is transferred to the client PC.

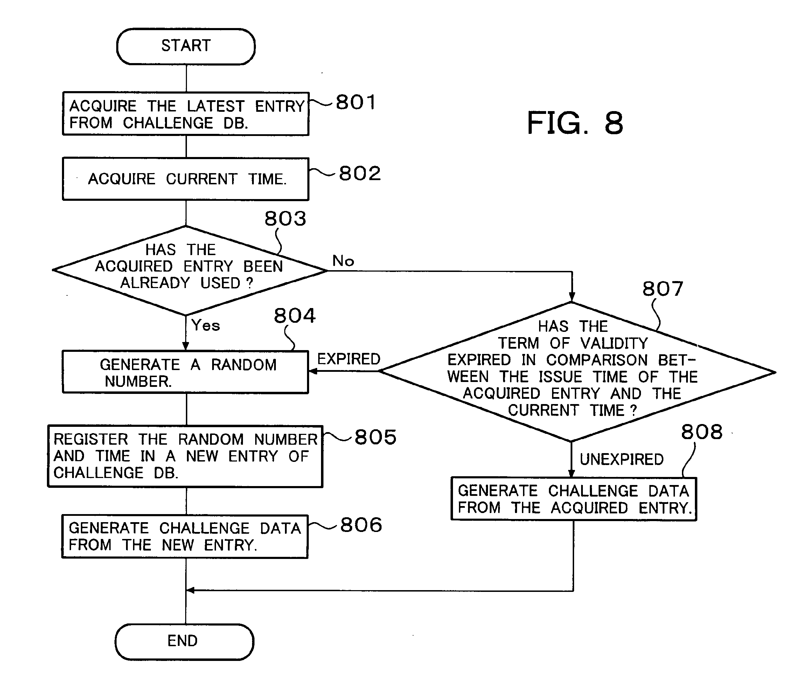

Fig. 8 is a flow chart for explaining a processing operation of the challenge issue program 408 on the server 103. The processing operation of the challenge issue program 408 will be described below. Incidentally, the processing in the challenge issue program 408 is the same as the processing in the step 704 of the flow described with reference to Fig. 7A.
(1) When the processing starts, the challenge issue program 408 first acquires the latest entry of the issue time 603 from the challenge DB 410 and acquires current time (steps 801 and 802).
(2) Then, whether or not the entry acquired in the process of the step 801 has been already used by the user is confirmed by referring to the use flag 604 in the acquired entry (step 803).
(3) When the judgment in the step 803 concludes a decision that the acquired entry has been already used by the user (i.e. the use flag is 1), a random number is generated so that the generated random number and the current time acquired in the process of the step 802 are registered in a new entry of the challenge DB 410. In this new entry, the use flag 604 is set at 0 and the item number 601 is set at a value obtained by adding +1 to the item number of the entry acquired in the process of the step 801. Incidentally, when the item number 601 exceeds the maximum number allowed to be set as the item number 601, the item number 601 is set at 1 (step 805).
(4) Challenge data in which the item number 601 of the new entry registered in the process of the step 805 and the issued random number 602 are set is generated from the new entry and the processing herein is terminated. Incidentally, the item number 601 is used as an identifier for the random number so that the item number 601 is used at the time of authentication processing (which will be described later) to identify the random number based on which the response data from the client PC 101 was generated (step 806).
(5) When the judgment in the step 803 concludes a decision that the acquired entry has not been used by the user (i.e. the use flag is 0), whether or not the term of validity of the entry acquired in the process of the step 801 is expired is confirmed. That is, whether or not the term of validity is expired is confirmed based on whether or not the time obtained by adding the predetermined term of validity to the issue time 603 of the acquired entry is before the current time acquired in the process of the step 802 (step 807).
(6) When the confirmation in the step 807 concludes a decision that the time obtained by adding the predetermined term of validity to the issue time 603 of the acquired entry is not before the current time acquired in the process of the step 802, i.e., the term of validity of the acquired entry is unexpired, challenge data in which the item number 601 and the issue random number 602 of the entry acquired in the process of the step 801 are set is generated and the processing herein is terminated (step 808).
(7) When the confirmation in the step 807 concludes a decision that the time obtained by adding the predetermined term of validity to the issue time 603 of the acquired entry is before the current time acquired in the process of the step 802, i.e., the term of validity of the acquired entry is expired, the current situation of the routine goes back to the process of the step 804 and processing after that continues.

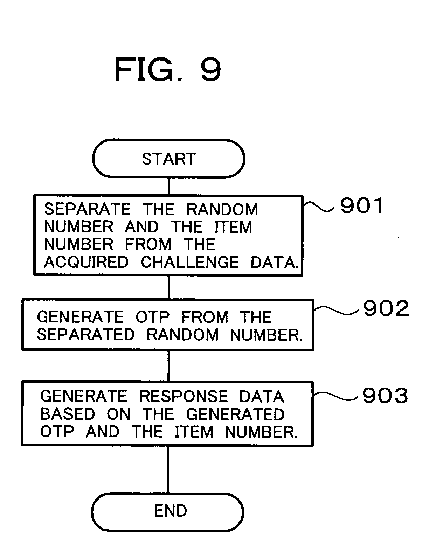

Fig. 9 is a flow chart for explaining a processing operation in the response generating program 306 on the portable terminal 102. The processing operation in the response generating program 306 will be described below. Incidentally, the processing in the response generating program 306 is the same as the processing in the step 709 of the flow described with reference to Fig. 7A.
(1) When the processing starts, the response generating program 306 first separates the random number and the item number from the challenge data acquired in the process of the step 708 of the flow described with reference to Fig. 7A (step 901).
(2) Then, a one-time password (hereinafter referred to as OTP) is generated by use of a cryptographic hash function etc. shared with the server 103 in advance, with the random number separated in the process of the step 901 and the shared secret data 307 as its arguments (step 902).
(3) Then, the OTP generated in the process of the step 902 and the item number separated in the process of the step 901 are set, so that response data is generated (step 903).

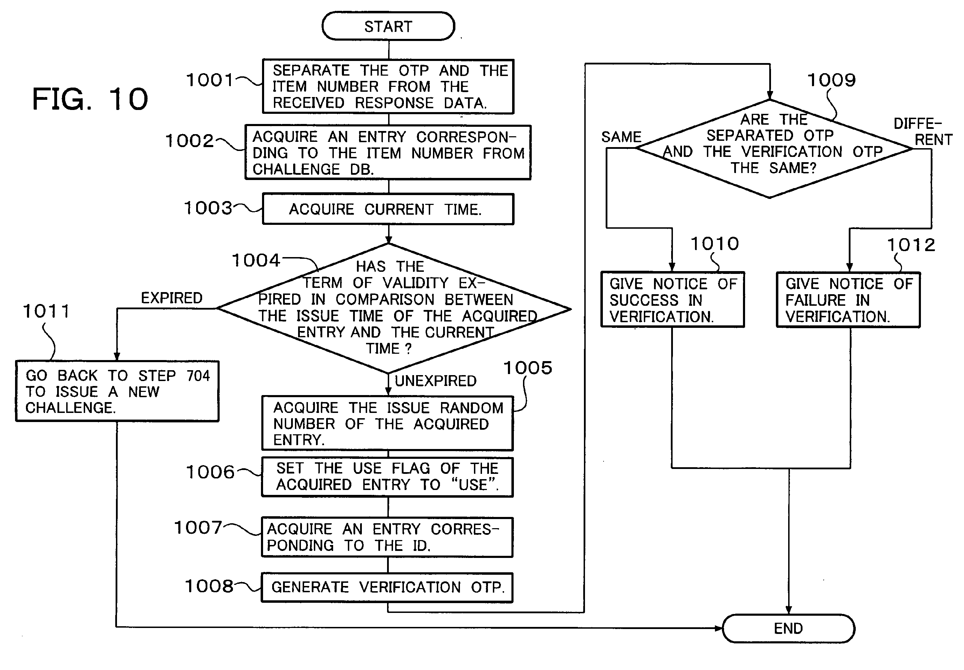

Fig. 10 is a flow chart for explaining a processing operation in the authentication program 407 on the server 103. The processing operation in the authentication program 407 will be described below. Incidentally, the processing in the authentication program 407 is the same as the processing in the step 714 of the flow described with reference to Fig. 7B.
(1) When the processing starts, the authentication program 407 first separates the OTP and the item number from the response data received in the process of the step 713 of the flow described with reference to Fig. 7B (step 1001).
(2) Then, an entry corresponding to the item number acquired in the process of the step 1001 is acquired from the challenge DB 410 and current time is acquired (steps 1002 and 1003).
(3) Whether or not the term of validity of the entry acquired in the process of the step 1002 is expired is confirmed. That is, whether or not the term of validity is expired is confirmed based on whether or not the time obtained by adding the predetermined term of validity to the issue time 603 of the acquired entry is before the current time acquired in the process of the step 1003 (step 1004).
(4) When the confirmation in the step 1004 concludes a decision that the time obtained by adding the predetermined term of validity to the issue time 603 of the acquired entry is not before the current time acquired in the process of the step 1003, i.e., the term of validity of the acquired entry is unexpired, the issue random number 602 of the entry acquired in the process of the step 1002 is acquired (step 1005).
(5) Then, the use flag 604 of the entry acquired in the process of the step 1002 is set at 1 ("used") and an entry corresponding to the user ID received in the process of the step 713 is acquired from the account DB 409 (steps 1006 and 1007).
(6) Then, a verification OTP is generated by use of a cryptographic hash function etc. shared with the client PC 101 by a predetermined agreement to the client PC 101, with the issue random number acquired in the process of the step 1005 and the shared secret data 503 of the entry acquired in the process of the step 1007 as its arguments (step 1008).
(7) To judge whether or not the client PC 101 is authenticated, the OTP separated in the process of the step 1001 and the verification OTP generated in the process of the step 1008 are compared with each other to thereby judge whether or not the values of the OTPs are the same (step 1009).
(8) When the judgment in the step 1009 concludes a decision that the values are the same, the authentication is regarded as resulting in success and notification of success in authentication is given to the existing server program 406, whereas when the judgment in the step 1009 concludes a decision that the values are not the same, the authentication is regarded as resulting in failure and notification of failure in authentication is given to the existing server program 406 and the processing herein is terminated (steps 1010 and 1012).
(9) When the confirmation in the step 1004 concludes a decision that the time obtained by adding the predetermined term of validity to the issue time 603 of the acquired entry is before the current time acquired in the process of the step 1003, i.e., the term of validity of the acquired entry is expired, the processing herein is terminated and the current situation of this routine goes back to the step 704 of the flow shown in Fig. 7A to issue new challenge data (step 1011).

Each processing in the aforementioned embodiment of the invention can be constituted by a program and can be executed by the CPU in each of the client PC, the portable terminal and the server provided in the invention. These programs can be provided in a state where these programs are stored in a recording medium such as an FD, a CDROM, a DVD, etc. or can be provided as digital information through a network.

According to the aforementioned embodiment of the invention, an authentication function using a challenge response system can be added to an existing system easily because challenge data is transmitted by a communication connection other than the communication connection by which a service is provided whereas response data is received by the communication connection by which a service is provided. Moreover, since the server adds an identifier to challenge data, challenge data and response data can be uniquely associated with each other, so that the authentication process can be executed safely even when such two communication connections are used.

According to the aforementioned embodiment of the invention, new challenge data is issued in a stage in which issued challenge data has been used for authentication. Accordingly, even when a mass of authentication requests are received, more challenge data than necessary can be prevented from being issued, so that consumption of resources for holding challenge data can be suppressed.

## Claims

1. An authentication system for authenticating a client personal computer (101), comprising a server (103), the client personal computer (101) connected to the server (103) through a network (104) for using a service provided by the server (103), and a portable terminal (102) possessed by a user of the client personal computer (101) and capable of being connected to the server (101) through the network (104) or through another communication line, wherein:
the server (103) includes a unit (408, 403) for issuing identifier-including challenge data for an authentication process and transmitting the identifier-including challenge data to the client personal computer (101), a unit (403, 406) for receiving identifier-including response data from the client personal computer (101) and extracting corresponding challenge data, and a unit (407) for authenticating the client personal computer (101) based on the extracted challenge data and the received response data;
the client personal computer (101) includes a unit (203, 207, 205) for receiving the identifier-including challenge data from the server (103) and displaying the identifier-including challenge data;
the portable terminal (102) includes a unit (306) for acquiring the identifier-including challenge data received by the client personal computer (101), and a unit (306, 303) for generating identifier-including response data from the acquired identifier-including challenge data and transmitting the response data to the server (103); and a communication channel by which the identifier-including challenge data is transmitted from the server (103) to the client personal computer (101) and a communication channel by which the response data is transmitted from the portable terminal (102) to the server (103) are independent of each other.

2. The authentication system according to Claim 1, wherein the client personal computer (101) is adapted to display the challenge data received from the server (103) as a two-dimensional bar code, so that the portable terminal (102) uses a camera contained in the portable terminal (102) to photograph the two-dimensional bar code displayed on the client personal computer (101) to thereby acquire challenge data.

3. The authentication system according t o Claim 1 or 2, wherein the server (103) is adapted to issue identifier-including challenge data by using challenge data when the challenge data has been already issued but has not been used for authentication yet and is held as such valid challenge data that a predetermined time has not passed yet since the issue, whereas the server (103) issues identifier-including challenge data by issuing new challenge data when such challenge data is not held.

4. An authentication method for authenticating a client personal computer (101) in the condition that a server (103) and the client personal computer (101) using a service provided by the server (103) are connected to each other through a network (104), wherein:
there is provided a portable terminal (102) possessed by a user of the client personal computer (101) and capable of being connected to the server (103) through the network (104) or independently through another communication line;
the server (103) transmits identifier-including challenge data to the client personal computer (101) for an authentication process;
the client personal computer (101) receives the identifier-including challenge data from the server (103)and displays the identifier-including challenge data;
the portable terminal (102) acquires the identifier-including challenge data received by the client personal computer (101), generates identifier-including response data from the acquired identifier-including challenge data and transmits the response data to the server (103); and
the server (103) receives the identifier-including response data from the client personal computer (101), extracts corresponding challenge data and authenticates the client personal computer (101) based on the extracted challenge data and the received response data.

5. The authentification method of claim 4 wherein the client personal computer (101) displays the challenge data received from the server (103) as a two-dimensional bar code, so that the portable terminal uses a camera contained in the portable terminal to photograph the two-dimensional bar code displayed on the client personal computer (101) to thereby acquire challenge data.

6. The authentification method of claim 4 or 5 wherein the server (103) issues identifier-including challenge data by using challenge data when the challenge data has been already issued but has not been used for authentication yet and is held as such valid challenge data that a predetermined time has not passed yet since the issue , whereas the server issues identifier-including challenge data by issuing new challenge data when such challenge data is not held.
